# EUROPEAN PATENT APPLICATION

(11) **EP 3 437 716 A1**
(43) Date of publication of application: **06.02.2019**
(21) Application number: 17773586.7
(22) Date of filing: 25.01.2017
(51) Int. Cl.: B01D 53/14, B01J 20/26, B32B 27/18, B65D 1/02, B65D 65/40

(54) **OXYGEN ABSORBER COMPOSITION, OXYGEN-ABSORBING MULTILAYER BODY, OXYGEN-ABSORBING PACKAGING CONTAINER, AND METHOD FOR STORING ARTICLE**

(30) Priority: 30.03.2016 JP 2016067851
(71) Applicant: Mitsubishi Gas Chemical Company, Inc., Tokyo 100-8324 (JP)
(72) Inventor: KAWAI, Ryuichiro, Tokyo 125-8601 (JP); KUBO, Takashi, Tokyo 125-8601 (JP); TAGUCHI, Jungo, Tokyo 125-8601 (JP); SATO, Daiki, Tokyo 125-8601 (JP); NIIMI, Kenichi, Tokyo 125-8601 (JP); MASUDA, Akihiro, Tokyo 100-8324 (JP)
(74) Representative: Hoffmann Eitle
(86) International application number: PCT/JP2017/002569
(87) International publication number: WO 2017/169036

(57) **Abstract**

The present invention provides an oxygen absorber composition containing a hydrocarbon resin; an iron particle having an average particle diameter of 1.0 µm or more and 200 µm or less and having a BET specific surface area of 10 m²/g or more; and an aldehyde absorber capable of absorbing at least aldehyde compound, wherein the iron particle contains iron.

## Description

### Technical Field

The present invention relates to an oxygen absorber composition, an oxygen-absorbing multilayer body, an oxygen-absorbing packet, and a method for storing an article.

### Background Art

Oxygen absorbers are used as one of preservatives for foods, drugs, and so on. Oxygen absorbers are used to prevent degradation of an object to be stored due to oxidation, and required to have various performances depending on the characteristics of the object.

For example, Patent Literature 1, whose object is to provide an oxygen scavenger having improved oxygen absorption ability and improved handleability as compared with titanium oxide, and a method for producing the oxygen scavenger, discloses an oxygen scavenger which removes oxygen in an atmosphere through absorption, the oxygen scavenger consisting of cerium oxide having oxygen defects and being a powder having a specific surface area of 0.6 m²/g or less or a molded body having a specific surface area of 3.0 m²/g or less, and discloses that the oxygen scavenger can react with oxygen even in the absence of moisture in an atmosphere and prevent itself from being heated through reaction caused by a metal detector or microwaves from a microwave oven because the oxygen scavenger consists of cerium oxide having oxygen defects.

Patent Literature 2, whose object is to provide an oxygen absorber having an ability to absorb oxygen in an atmosphere even in the situation that no or almost no moisture is present in the atmosphere, discloses an oxygen absorber containing a metal obtained through treatment of an alloy containing (A) at least one transition metal selected from the group consisting of elements belonging to the manganese group, the iron group, the platinum group, and the copper group, and (B) at least one metal selected from the group consisting of aluminum, zinc, tin, lead, magnesium, and silicon with an acid or alkali aqueous solution to remove at least a part of the component (B) through dissolution out.

In addition, Patent Literature 3, whose object is to provide an oxygen-absorbing resin composition, an oxygen-absorbing multilayer body, and an oxygen-absorbing hollow container each capable of absorbing oxygen in an atmosphere even in the situation that the atmosphere has low humidity, discloses an oxygen-absorbing resin composition containing an oxygen absorber consisting of a metal (metal (I)) obtained through treatment of (A) an alloy containing (I) at least one selected from the group consisting of elements belonging to the manganese group, zinc, tin, lead, magnesium, and silicon with an acid or alkali aqueous solution to remove at least a part of the component (B) through dissolution out; and (II) a thermoplastic resin.

### Citation List

### Patent Literature

Patent Literature 1: Japanese Patent Laid-Open No. 2007-185653
Patent Literature 2: International Publication No. WO 2012/105457
Patent Literature 3: International Publication No. WO 2013/073590

### Summary of Invention

### Technical Problem

Although the oxygen absorber described in Patent Literature 1 has an ability to absorb oxygen even in an atmosphere with no or almost no moisture, however, it is poor in practical utility because of requirement of a rare and expensive rare metal for the raw material.

In the case that the oxygen absorber described in Patent Literature 2 or 3 is used, when the oxygen absorber is blended with a hydrocarbon resin for the purpose of, for example, obtaining the oxygen absorber through molding, a part of the hydrocarbon resin and the oxygen absorber may react together and generate an aldehyde compound to cause an odor.

In such circumstances, the present invention was made to solve at least a part of the above-mentioned problems, and an object of the present invention is to provide an oxygen absorber composition having an ability to absorb oxygen in a given atmosphere and being capable of preventing at least an odor due to aldehyde compounds.

### Solution to Problem

The present inventors diligently studied to solve the above-mentioned problems inherent in the conventional techniques, and found that an oxygen absorber containing a hydrocarbon resin, a particular iron particle, and a particular aldehyde absorber has an ability to absorb oxygen in a given atmosphere and is capable of preventing at least an odor due to aldehyde compounds, and thus completed the present invention.

Specifically, the present invention is as follows.
[1] An oxygen absorber composition containing:
   a hydrocarbon resin;
   an iron particle having an average particle diameter of 1.0 µm or more and 200 µm smaller and having a BET specific surface area of 10 m²/g or more; and
   an aldehyde absorber capable of absorbing at least aldehyde compound.
[2] The oxygen absorber composition according to [1], wherein the aldehyde absorber comprises a basic compound.
[3] The oxygen absorber composition according to [1] or [2], wherein the aldehyde absorber comprises magnesium oxide or calcium oxide.
[4] The oxygen absorber composition according to any one of [1] to [3], wherein the aldehyde absorber comprises at least one derivative selected from the group consisting of a hydrazine derivative, a urea derivative, and a guanidine derivative.
[5] The oxygen absorber composition according to [4], wherein the hydrazine derivative is at least one selected from the group consisting of an aminoguanidine derivative and a hydrazine salt.
[6] The oxygen absorber composition according to [4] or [5], wherein the aldehyde absorber comprises a carrier that supports the derivative.
[7] The oxygen absorber composition according to any one of [1] to [6], wherein the hydrocarbon resin is at least one resin selected from the group consisting of polyolefin resin, polyester resin, polyamide resin, polyvinyl alcohol resin, ethylene-vinyl alcohol copolymer resin, and chlorine-containing resin.
[8] The oxygen absorber composition according to any one of [1] to [7], wherein the iron particle is a porous-shaped iron particle.
[9] The oxygen absorber composition according to any one of [1] to [8], wherein
   the iron particle is obtained through treatment of an alloy containing the iron and a particular element with an alkali aqueous solution to remove at least a part of the particular element through dissolution out, and
   the particular element is at least one element selected from the group consisting of aluminum, zinc, tin, lead, magnesium, and silicon.
[10] An oxygen-absorbing multilayer body including a plurality of layers, wherein
   the oxygen absorber composition according to any one of [1] to [9] is used for at least one layer of the plurality of layers.
[11] An oxygen-absorbing packet including a packet, wherein the packet comprises the oxygen-absorbing multilayer body according to [10] at least as a part of the packet.
[12] A method for storing an article, wherein an article to be stored is stored by using the oxygen-absorbing multilayer body according to [10] or the oxygen-absorbing packet according to [11].

### Brief Description of Drawings

Figure 1 shows a cross-sectional view schematically illustrating one example of an oxygen-absorbing packet according to an embodiment of the present invention.
Figure 2 shows a side view (a), cross-sectional view (b), and plan view (c) illustrating one example of an oxygen-absorbing packet according to an embodiment of the present invention.
Figure 3 shows a schematic illustration of a test apparatus for measurement of aldehyde concentration or the like for an oxygen-absorbing packet according to an embodiment of the present invention.

### Description of Embodiments

Hereinafter, modes for implementation of the present invention (hereinafter, referred to as "embodiment of the present invention") will be described in detail. Embodiments of the present invention below are examples to describe the present invention, and not intended to limit the present invention to the contents below. The present invention can be implemented with appropriate modification without departing from the scope of the invention.

### [Oxygen absorber composition]

The oxygen absorber composition according to an embodiment of the present invention contains a hydrocarbon resin; an iron particle having an average particle diameter of 1.0 µm or more and 200 µm or less and having a BET specific surface area of 10 m²/g or more; and an aldehyde absorber capable of absorbing at least aldehyde compounds. The oxygen absorber composition according to the present embodiment has an ability to absorb oxygen (hereinafter, also referred to as "oxygen absorption ability", simply) and is capable of preventing at least an odor due to aldehyde compounds. Here, the term "oxygen absorber composition" refers to a composition to function as an oxygen absorber. The term "oxygen absorber" refers to a substance capable of selectively absorbing oxygen in a surrounding oxygen-containing atmosphere in which the oxygen absorber is disposed.

The oxygen absorber composition according to the present embodiment can suitably exhibit oxygen absorption ability even in an atmosphere under low humidity conditions (e.g., conditions of 30%RH (relative humidity) or lower (25°C)). More specifically, the oxygen absorber composition can absorb at least 5 mL/g of oxygen, and more preferably 10 mL/g of oxygen with respect to the mass of the iron particle in the oxygen absorber composition in an atmosphere with low humidity of 30%RH (relative humidity) or lower (25°C) . The amount of oxygen absorbed can be, for example, 5 mL/g or more and 150 mL/g or less in an atmosphere with low humidity of 30%RH (relative humidity) or lower (25°C).

### [Hydrocarbon resin]

The oxygen absorber composition according to the present embodiment contains a hydrocarbon resin. The term "hydrocarbon resin" refers to a resin having repeating units each including at least one hydrocarbon in the structure. The hydrocarbon resin is not limited, and any known hydrocarbon resin can be used. Polyethylene, polypropylene, ethylene-vinyl acetate copolymer, elastomer, or a mixture of them is preferably used, from the viewpoint of oxygen absorption ability.

One hydrocarbon resin may be used singly, or two or more hydrocarbon resins may be used in combination.

The content of the hydrocarbon resin is preferably 20% by mass or more and 99.9% by mass or less, more preferably 30% by mass or more and 95% by mass or less, and even more preferably 60% by mass or more and 90% by mass or less, with respect to the total quantity (100% by mass) of the oxygen absorber composition. The processability of the composition tends to be satisfactory by virtue of the content of 30% by mass or more.

### [Iron particle]

The iron particle in the present embodiment contains iron, and has an average particle diameter of 1.0 µm or more and 200 µm or less and has a BET specific surface area of 10 m²/g or more.

The iron particle can be obtained, for example, through treatment of an alloy containing iron and a particular element with an alkali aqueous solution to remove at least a part of the particular element through dissolution out, though the method is not limited thereto. Here, the particular element is at least one element selected from the group consisting of aluminum, zinc, tin, lead, magnesium, and silicon, preferably at least one element selected from the group consisting of aluminum, zinc, magnesium, and silicon, more preferably aluminum, zinc, magnesium, or silicon, and even more preferably aluminum. Aluminum is preferred because it is inexpensive.

The iron particle may further contain, in addition to iron, any transition metal belonging to the manganese group (manganese, technetium, rhenium), the iron group (cobalt, nickel), the platinum group (ruthenium, rhodium, palladium, osmium, iridium, platinum), or the copper group (copper, silver, gold).

The alloy containing iron and the particular element can further contain an additional metal such as molybdenum, chromium, titanium, vanadium, and tungsten, and may further contain an additional component such as a cyanide. The term "alloy" refers not only to an alloy of single composition with a particular crystal structure, but also to a mixture thereof and a mixture of metals themselves.

The alloy containing iron and the particular element is prepared, for example, by using a melting method, though the method is not limited thereto. In the method, the composition ratio between iron and the particular element in the alloy (iron : particular element) is preferably 20:80 to 80:20, and more preferably 30:70 to 70:30. For a more specific example, in the case that the particular element is aluminum, it is preferred that the fraction of iron be 30% by mass or more and 55% by mass or less, and the fraction of aluminum be 45% by mass or more and 70% by mass or less, with respect to the total quantity (100% by mass) of iron and aluminum.

The iron particle in the present embodiment has an average particle diameter of 1.0 µm or more and 200 µm or less, preferably of 5.0 µm or more and 150 µm or less. The average particle diameter within the above range allows the iron particle to be satisfactorily dispersed in the resin. To obtain an iron particle having an average particle diameter within the above range, it is suitable to control conditions for fine-grinding of the alloy described later. An average particle diameter is a value calculated from a particle size distribution acquired from measurement of particle diameters by using a laser diffraction method, and can be measured, for example, by using a laser diffraction/scattering particle size distribution analyzer (e.g., trade name "SK Laser Micron Sizer LMS-2000e" produced by SEISHIN ENTERPRISE Co., Ltd.).

The iron particle in the present embodiment has a BET specific surface area of 10 m²/g or more, preferably of 30 m²/g or more. The BET specific surface area of 10 m²/g or more provides superior oxygen absorption ability. To obtain an iron particle having a BET specific surface area within the above range, for example, it is suitable to set the iron particle porous-shaped as described later. The BET specific surface area is measured by using a method described later in Examples.

Although the alloy obtained may be directly treated with an alkali aqueous solution, it is preferred to finely grind the alloy into an alloy powder and then treat the alloy powder with an alkali aqueous solution. To finely grind the alloy, for example, a conventional method for crushing or grinding metal can be appropriately used, and examples thereof include a method including grinding with a jaw crusher, a roll crusher, a hammer mill, or the like, and, as necessary, finely grinding with a ball mill. Alternatively, a melt of the alloy may be finely powdered through rapid solidification such as atomizing. In the case that atomizing is used, it is preferred to perform atomizing in an inert gas such as argon gas. For example, a method described in Japanese Patent Laid-Open No. 5-23597 can be used for atomizing.

The particle diameter of the alloy powder is preferably in the range of 5.0 µm or more and 200 µm or less, and the particle diameter distribution is preferably as narrow as possible. The average particle diameter can be measured, for example, by using a laser diffraction particle size distribution analyzer or the like, and specifically determined as follows. A sample is dispersed in water, and particle size distribution is measured after ultrasonic dispersion, and D5, D50, and D95 are defined for the acquired particle size distribution as follows. D5 indicates a particle diameter value at which the summation of percentages by volume with a particle diameter equal to or lower than a given particle diameter reaches 5% based on the total value of percentages by volume for the whole particle system to be measured. D50 indicates a particle diameter value at which the summation of percentages by volume with a particle diameter equal to or lower than a given particle diameter reaches 50% based on the total value of percentages by volume for the whole particle system to be measured, and it means the average particle diameter. D95 indicates a particle diameter value at which the summation of percentages by volume with a particle diameter equal to or lower than a given particle diameter reaches 95% based on the total value of percentages by volume for the whole particle system to be measured. It is preferred that D5 be around 3.0 µm, D50 be around 20 µm, and D95 be around 65 µm. If these ranges are achieved, problems in processing are less likely to arise even when a film or the like with a thickness of smaller than 100 µm is produced. To obtain a alloy powder having such an average particle diameter, it is suitable to appropriately sieve (classify) with commercially available mesh sieves (e.g., a 200-mesh sieve) for the purpose of excluding particles with large particle diameters and homogenize the particle diameter distribution. In the case that atomizing is used, the alloy powder tends to have a generally spherical shape, and a narrow particle diameter distribution is likely to be achieved.

In the treatment with an alkali aqueous solution, any alkali aqueous solution can be used, without any limitation, which does not dissolve iron therein or hardly dissolves iron therein while being capable of dissolving and removing the particular element, in other words, any alkali aqueous solution which can dissolve out the particular element from the alloy can be used. The alkali in the treatment with an alkali aqueous solution is not limited, and examples thereof include sodium hydroxide, potassium hydroxide, Na₂CO₃, K₂CO₃, and ammonia, and sodium hydroxide is preferred. In the case that aluminum is used for the particular element, for example, if sodium hydroxide is used as the alkali, it is easy to remove excessive sodium hydroxide through water washing and remove dissolved-out aluminum. For this reason, an effect of reduction in the number of times of water washing is advantageously expected. One of the alkalis may be used singly, or two or more thereof may be used in combination.

The treatment with an alkali aqueous solution is not limited. In the case of an alloy powder, for example, the treatment with an alkali aqueous solution may be performed in a manner such that an alloy powder is gradually added into the aqueous solution with stirring, or in a manner such that an alloy powder is put in water in advance and a thick alkali is added dropwise thereto.

The concentration of the alkali to be used in the treatment with an alkali aqueous solution is preferably 5.0% by mass or more and 60% by mass or less. More specifically, in the case of sodium hydroxide, the concentration is preferably 10% by mass or more and 40% by mass or less.

In the treatment with an alkali aqueous solution, the temperature of the aqueous solution is preferably 20°C or higher and 120°C or lower, and more preferably 25°C or higher and 100°C or lower.

The treatment time to treat the alloy or alloy powder with an alkali aqueous solution may vary depending on the shape, condition, and content of the alloy to be used, the concentration of the alkali aqueous solution, and the temperature during the treatment. However, the treatment time is preferably 30 minutes or longer and 300 minutes or shorter. The amount of the particular element dissolved out from the alloy can be controlled through adjustment of the treatment time.

The above-mentioned phrase "remove at least a part of the particular element through dissolution out" not only means that a part of the particular element is dissolved out and removed from the alloy containing iron and the particular element, but also encompasses the case that all of the particular element is dissolved out and removed from the alloy. Since the possibility cannot be excluded that a part of the iron is dissolved as a result of the dissolution out process, it is not needed to interpret the phrase "at least a part of the particular element" in a manner such that the phrase is limited to the case that only the particular element is dissolved out through the treatment with an alkali aqueous solution.

At least a part, preferably almost all of the particular element (e.g., aluminum) is dissolved out from the alloy through the treatment with an alkali aqueous solution. The fraction of the particular element dissolved out from the alloy can be estimated from the %content (mass-based) of the particular element in the metal resulting from the removal through dissolution out (retention rate).

The %content of the particular element in the oxygen absorber composition is preferably 0.1% by mass or more and 50% by mass or less, and more preferably 1.0% by mass or more and 40% by mass or less, with respect to the total quantity (100% by mass) of the iron particle. More specifically, in the case that the alloy is an alloy of iron and aluminum (Al-Fe alloy), the %content of aluminum in the metal resulting from the treatment with an alkali aqueous solution to remove aluminum through dissolution out is preferably 0.1% by mass or more and 50% by mass or less, and more preferably 1.0% by mass or more and 40% by mass or less. The %content of the particular element (e.g., aluminum) in the iron contained in the oxygen-absorbing resin composition can be measured, for example, by using an ICP method.

After the treatment with an alkali aqueous solution, water washing is preferably performed. Since the metal or metal powder thus obtained is immediately deteriorated through oxidation for the most part in the air, the metal or metal powder can be stored in water, as necessary.

In preparation of the iron particle to be used as the oxygen absorber, it is preferred to carefully perform the treatment of an alloy containing iron and a particular element with an alkali aqueous solution to prevent the metal and the alloy from contacting with oxygen, as much as possible, after the treatment. Accordingly, it is more preferred to perform the series of treatments in an aqueous solution and water and store the product as it is, or to perform the series of treatments under oxygen-free conditions or in an inert gas. In the case that the metal is needed to be taken out of water and dried in use, it is preferred to dry and retain the metal under conditions such that the influence of oxygen is excluded as much as possible, for example, by means of vacuum-drying.

The iron particle in the present embodiment is preferably a porous-shaped iron particle. The iron particle obtained through the treatment of the alloy with an alkali aqueous solution as described above is a porous-shaped iron particle. The term "porous-shaped" refers to a state in which many pores substantially visible through an electron microscope are present in the surface and inside of the iron particle. The degree of the porous shape of the iron particle can be represented as the specific surface area. Specifically, the degree of the porous shape of the iron particle is represented by a value of the above-mentioned BET specific surface area.

Alternatively, the degree of the porous shape of the iron particle can be represented by the bulk density. The bulk density of the iron particle is preferably 2.0 g/cm³ or lower, and more preferably 1.5 g/cm³ or lower. In the case that the iron particle is a normal iron powder which is not porous-shaped (a reduced iron powder or an atomized iron powder), the bulk density is approximately higher than 2.0 g/cm³ and 3.0 g/cm³ or lower.

One iron particle may be used singly, or two or more iron particles may be used in combination.

The content of the iron particle is preferably 5% by mass or more and 80% by mass or less, more preferably 10% by mass or more and 70% by mass or less, and even more preferably 15% by mass or more and 50% by mass or less, with respect to the total quantity (100% by mass) of the oxygen absorber composition. The oxygen absorption ability tends to be more satisfactory by virtue of the content of 1.0% by mass or more, and satisfactory processability is likely to be achieved through reduction in an increase in the viscosity of the composition by virtue of the content of 80% by mass or less.

### [Aldehyde absorber]

The aldehyde absorber in the present embodiment is capable of absorbing at least aldehyde compounds. The aldehyde absorber is only required to be capable of absorbing at least aldehyde compounds, and may be additionally capable of absorbing ammonia compounds, carbonyl compounds, or hydrogen sulfide. Here, the term "aldehyde compounds" refers to compounds including aldehyde compounds such as formaldehyde, acetaldehyde and derivatives thereof, the term "ammonia compounds" as compounds having at least one amino group, and the term "carbonyl compounds" as compounds having at least one carbonyl group.

By virtue of the aldehyde absorber contained, the oxygen absorber composition according to the present embodiment has oxygen absorption ability in a given atmosphere, and is capable of preventing at least an odor due to aldehyde compounds. The cause is inferred as follows (however, the cause is not limited to the following). First, the iron particle in the present embodiment can impart oxygen absorption ability to the oxygen absorber composition through oxidation of the surface of the iron particle by oxygen as a target to be absorbed. When an iron particle and a hydrocarbon resin to impart processability are mixed together in preparation of a conventional oxygen absorber composition, however, the hydrocarbon resin is inferred to be decomposed by the catalytic effect of the iron particle to generate an odor due to aldehyde compounds such as acetaldehyde. In particular, an iron particle having a BET specific surface area of 10 m²/g or more can impart superior oxygen absorption ability, but, on the other hand, is inferred to have high catalytic effect on the hydrocarbon resin. In addition, the fact regarding the type of metal that iron has ability of contact oxidation higher than that of, for example, nickel is inferred to be one of the causes for the decomposition. In contrast, the oxygen absorber composition according to the present embodiment, which contains an aldehyde absorber, is capable of preventing at least an odor due to aldehyde compounds through absorption of aldehyde compounds to be generated.

Examples of the aldehyde absorber include organic compounds and inorganic compounds, and examples of the absorption mechanism include chemical absorption and physical absorption. The term "chemical absorption" refers to absorption of an aldehyde compound through reaction with the aldehyde compound to form a chemical bond to the aldehyde compound. The term "physical absorption" refers to absorption of an aldehyde compound through the Van der Waals force of the aldehyde absorber.

It is preferred for the aldehyde absorber to contain a basic compound as a compound with a mechanism of chemical absorption, though it is not limited. It is also preferred for the aldehyde absorber to contain magnesium oxide or calcium oxide.

The aldehyde absorber preferably contains a nitrogen-containing compound, and more preferably contains at least one derivative selected from the group consisting of a hydrazine derivative, a urea derivative, and a guanidine derivative. The derivative contained can absorb aldehyde compounds through Schiff reaction. The hydrazine derivative is more preferably at least one selected from the group consisting of an aminoguanidine derivative and a hydrazine salt. Specific examples of the aminoguanidine derivative include, but are not limited to, aminoguanidine sulfate and aminoguanidine hydrochloride. Specific examples of the hydrazine salt include, but are not limited to, malonic dihydrazide.

The aldehyde absorber preferably contains a carrier that supports the derivative. Examples of the carrier include a porous body such as silicon dioxide, activated carbon, sepiolite, and mica. The porous body is preferably silicon dioxide. The carrier contained imparts resistance to high temperature during resin processing, and thus satisfactory dispersion is likely to be achieved in the resin.

Examples of commercially available products of the aldehyde absorber include Dushlite (produced by Sinanen Zeomic Co., Ltd.).

The average particle diameter of the aldehyde absorber with the carrier is preferably 0.01 µm or more and 50 µm or less, and more preferably 0.05 µm or more and 30 µm or less.

Examples of the aldehyde absorber as a substance with a mechanism of physical absorption include, but are not limited to, inorganic compounds such as zeolites (e.g., mordenite-type, Y-type, ZSM-5-type), aluminum phosphate, and hydroxyapatite.

One aldehyde absorber may be used singly, or two or more aldehyde absorbers may be used in combination.

The content of the aldehyde absorber is preferably 0.01 parts by mass or more and 100 parts by mass or less, more preferably 0.1 parts by mass or more and 50 parts by mass or less, and even more preferably 1.0 part by mass or more and 20 parts by mass or less with respect to the total quantity (100 parts by mass) of the iron particle in the oxygen absorber composition. More intense absorption of aldehyde compounds is likely to be achieved by virtue of the content of 0.01 parts by mass or more.

An optional component such as a dispersant, a coloring pigment, an antioxidant, a slipping agent, an antistatic agent, an additive such as a stabilizer, a filler, a desiccant, a deodorant, an antioxidant, a flame retardant, a photostabilizer, an ultraviolet absorber, a lubricant, an odor absorber, an antistatic agent, an antitack agent, an antifogging agent, and a surface-treating agent can be blended in the oxygen absorber composition. In particular, addition of a dispersant is recommended for improvement of the dispersion of the oxygen absorber.

### [Method for producing oxygen absorber composition]

The oxygen absorber composition according to the present embodiment can be prepared through mixing the above-described hydrocarbon resin, iron particle, and aldehyde absorber together. For mixing, for example, a master batch containing the hydrocarbon resin, iron particle, and aldehyde absorber is melt-kneaded, which is molded into a desired shape, and then cooled as needed. Thus, the oxygen-absorbing resin composition can be formed.

Examples of the form of the oxygen absorber composition include a film, a sheet, a pellet, and a powder. Among them, the forms of a sheet, a film, and a powder are preferred because the forms each allow a larger surface area per unit mass to provide improved oxygen absorption ability. In the case of a film, the thickness is preferably 10 µm or more and smaller than 250 µm. In the case of a sheet, the thickness is preferably 250 µm or more and smaller than 3.0 mm. In the case of a powder, the average particle diameter may be any average particle diameter equal to or more than the average particle diameter of the iron particle, and is preferably 5.0 µm or more and 1,000 µm or less, and more preferably 10 µm or more and 500 µm or less.

In addition, the oxygen absorber composition can be used for all or a part of various packaging forms including a pouch, a lid material for containers, a tray, a cup, a laminated tube container, a paper container, a bottle, and a blister container.

A known method can be employed without any limitation to form the oxygen absorber composition into a desired form. In the case that the oxygen absorber composition is formed into a sheet or a film, for example, the oxygen absorber composition can be formed through molding by using a solution-casting method, or through extrusion molding with a single-screw or multi-screw melt extruder allowing a material to pass through a die having a particular shape such as a T-die and a circular die. Alternatively, a compression molding method, an injection molding method, or the like can be employed.

The oxygen absorber composition according to the present embodiment can be applied in a moisture activity range from a high moisture activity region to a low moisture activity region. Accordingly, the oxygen absorber composition according to the present embodiment can be suitably applied to an article requiring storage under conditions of low moisture activity, low humidity, and dryness. Moisture activity is an indicator of the free water content of an article, and represented as a numerical value between 0 and 1, where the moisture activity of an article without moisture is 0 and that of pure water is 1. Specifically, the moisture activity, Aw, of an article is defined as Aw = P/P₀ = RH/100, wherein P denotes water vapor pressure in a space when an equilibrium state is reached after the article is hermetically packaged in the space; P₀ denotes water vapor pressure of pure water; and RH (%) denotes relative humidity in the space.

To store an article with a low moisture content, which requires storage at low humidity, the relative humidity (RH) of an atmosphere in which the article with a low moisture content is stored is preferably 0%RH or higher and 70%RH or lower, more preferably 0%RH or higher and 50%RH or lower, and even more preferably 0%RH or higher and 30%RH or lower.

Examples of articles with a low moisture content (articles to be stored) for which the oxygen absorber composition is suitably used include, but are not limited to, foods and agents susceptible to moisture increase and requiring avoidance of contamination such as powder or granule foods (powdered soups, powdered beverages, powder confectionery, seasonings, grain flours, nutritional foods, health foods, colorants, flavors, spices), powder or granule agents (powders, powdered soaps, dentifrice powders, industrial agents), and molded bodies thereof (tablet type).

Since the oxygen absorber composition according to the present embodiment can absorb oxygen regardless of the presence or absence of moisture in an article to be stored, the oxygen absorber composition according to the present embodiment can be suitably used for dry foods such as powdered seasonings, powdered coffee, coffee beans, grains of rice, tea leaves, beans, and okaki and senbei (rice crackers); drugs; and health foods such as vitamin supplements.

Provided is a method for storing an article, wherein an article to be stored is hermetically packaged together with an oxygen-absorbing packaging body, described later, packaging therein the oxygen absorber composition with a packaging material using an air-permeable packaging material for all or a part of the packaging material to store the article to be stored under oxygen scavenging.

### [Oxygen-absorbing multilayer body]

The oxygen-absorbing multilayer body according to an embodiment of the present invention includes a plurality of layers, wherein the above-described oxygen absorber composition is used for at least one layer of the plurality of layers. For example, the oxygen-absorbing multilayer body includes an oxygen-absorbing layer (layer a) and a thermoplastic resin layer (layer b) in one side or both sides of the oxygen-absorbing layer (layer a), wherein the oxygen absorber composition is used for the oxygen-absorbing layer (layer a). The oxygen-absorbing multilayer body according to the present embodiment may further include a gas barrier layer (layer c), and, for example, includes the thermoplastic resin layer (layer b), oxygen-absorbing layer (layer a), gas barrier layer (layer c), and thermoplastic resin layer (layer b) in the order presented. Now, each layer and the component thereof in the oxygen-absorbing multilayer body will be described.

The oxygen-absorbing layer (layer a) is a layer a part or all of which consists of the oxygen absorber composition.

The thermoplastic resin layer (layer b) is a layer consisting of a thermoplastic resin composition containing a thermoplastic resin. The thermoplastic resin is not limited, and, for example, a thermoplastic resin as the hydrocarbon resin used for the oxygen absorber composition can be used.

Use of a thermoplastic resin with low oxygen permeability for the thermoplastic resin in the oxygen-absorbing layer (layer a) and/or thermoplastic resin layer (layer b) prevents intrusion of oxygen and allows the oxygen-absorbing layer to absorb oxygen, and thus a multilayer body with high oxygen barrier properties can be provided. In this case, the oxygen permeability of the thermoplastic resin is preferably such that the oxygen permeability constant is 100 cc.20 µm/ (m²·day·atm) (23°C, dry) or lower, more preferably such that the oxygen permeability constant is 50 cc.20 µm/(m²·day·atm) (23°C, dry) or lower, and even more preferably such that the oxygen permeability constant is 20 cc.20 µm/ (m²·day·atm) (23°C, dry) .

The gas barrier layer (layer c) may consist of a barrier resin with poly(meta-xylylene adipamide) resin, ethylene-vinyl alcohol copolymer resin, polyvinylidene chloride, an amine-epoxy curing agent, or the like, or may consist of a deposited film of an inorganic matter or inorganic oxide, or a metal foil.

The oxygen-absorbing multilayer body according to the present embodiment may further include an adhesion layer (layer d). The adhesion layer (layer d) is included between the oxygen-absorbing layer (layer a) and the thermoplastic resin layer (layer b) and between the thermoplastic resin layer (layer b) and the gas barrier layer (layer c), and adheres adjacent layers. Examples of the adhesive contained in the adhesion layer (layer d) include known adhesives, and, for example, the adhesive is a laminating adhesive.

The oxygen-absorbing multilayer body according to the present embodiment may further include a layer other than the oxygen-absorbing layer (layer a), thermoplastic resin layer (layer b), gas barrier layer (layer c), and adhesion layer (layer d). For example, a protective layer consisting of a thermoplastic resin can be included inside or outside of the gas barrier layer (layer c).

Each of the layers included in the oxygen-absorbing multilayer body according to the present embodiment can further contain an additive such as a thermal stabilizer, a reinforcing agent, a filler, a flame retardant, a coloring agent, a plasticizer, an ultraviolet absorber, a lubricant, an odor absorber, an antistatic agent, an antitack agent, an antifogging agent, a surface-treating agent, and a desiccant, in a manner without essentially impairing the advantageous effects of the present invention.

The method for forming the oxygen-absorbing multilayer body according to the present embodiment into a desired shape is not limited, and any known method can be used. For example, the oxygen-absorbing multilayer body according to the present embodiment can be formed through molding by using a solution-casting method, or through extrusion molding with a single-screw or multi-screw melt extruder allowing a material to pass through a die having a particular shape such as a T-die and a circular die, or through molding by using a calendar method with a calendar roll. Alternatively, formation can be performed by using a formation method of vacuum-molding, pressure forming, plug-assist forming, or the like. In addition, formation can be performed through lamination of two or more films or sheets by using dry lamination or extrusion lamination.

The oxygen-absorbing multilayer body according to the present embodiment can be used for various forms including a pellet, a film, a sheet, a tray, a cup, a press-through package, a pouch, a container of a PTP (Press-Through Package), a bottle, a tube, a block, a deep-drawn container, a vacuum-molded container, and a cap.

The oxygen-absorbing multilayer body according to the present embodiment may be in a form of a pre-molded body (also called preform) for an oxygen-absorbing packet. For example, a co-injection molding method can be used for molding of a pre-molded body. The oxygen-absorbing packet can be produced by using a method of subjecting a pre-molded body to biaxial stretch blow molding.

### [Oxygen-absorbing packet]

The oxygen-absorbing packet according to an embodiment of the present invention includes a packet, wherein the packet at least includes the above-described oxygen-absorbing multilayer body as a part of the packet.

The thickness of the oxygen-absorbing layer (a) in the oxygen-absorbing multilayer body constituting the packet is not limited, and can be appropriately adjusted within a preferred range in accordance with the type of the packet. For example, the thickness of the oxygen-absorbing multilayer body constituting the packet is preferably 2.0 mm or less in the case that the packet is a bottle or a sheet, and preferably 300 µm or less in the case that the packet is a film/blister. The thickness of the oxygen-absorbing layer (a) is preferably 10 µm or more and 500 µm or less. In addition, the thickness of the gas barrier layer (c) can be suitably adjusted in accordance with a material used for the gas barrier layer (e.g., aluminum or EVOH).

The oxygen-absorbing packaging body configured with use of the above-described oxygen-absorbing multilayer body for a part or all of the packet for hermetic packaging in a manner such that the thermoplastic resin layer (layer b) is disposed in the inner side absorbs oxygen in a container in addition to a trace amount of oxygen which has intruded from the outside of the container, and thus can prevent deterioration or the like of an object contained in the container due to oxygen.

A specific example of use of the oxygen-absorbing multilayer body for a part of a packet for hermetic packaging is a configuration using the oxygen-absorbing multilayer body only for one side of the trunk of a standing pouch and using not the oxygen-absorbing multilayer body but a barrier resin for another side of the trunk and the bottom.

Another specific example of use of the oxygen-absorbing multilayer body for a part of a packet for hermetic packaging is a configuration using a laminate including a barrier resin such as EVOH resin for a deep-drawn container and using the oxygen-absorbing multilayer body for a lid material.

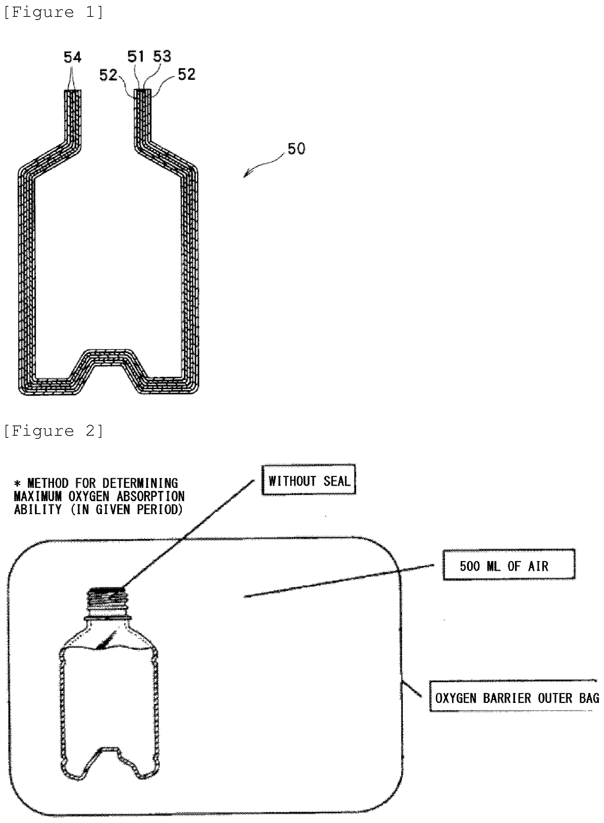

Figure 1 is a cross-sectional view schematically illustrating one example of the oxygen-absorbing packet according to the present embodiment. The form of the packet is a bottle. In an oxygen-absorbing hollow container 50 in Figure 1, layers of a thermoplastic resin layer (layer b) 52, an adhesion layer (layer d) 54, a gas barrier layer (layer c) 53, an adhesion layer (layer d) 54, an oxygen-absorbing layer (layer a) 51, and a thermoplastic resin layer (layer b) 52 are disposed in the order from the outer surface to the inner surface.

Figure 2 shows a side view (a), cross-sectional view (b), and plan view (c) illustrating one example of the oxygen-absorbing packet according to the present embodiment. The form of the packet is a film, specifically, a form of a flat pouch. Figure 2 (c) illustrates an oxygen-absorbing packaging body 100 with an opening 40 slightly opened. As illustrated in Figure 2 (a), the oxygen-absorbing packaging body 100 includes an oxygen-absorbing film B which is double-folded to give a width Bw and inserted between two multilayer films A in a manner such that the mountain fold b of double-folding is positioned in the inside of the oxygen-absorbing packaging body 100, and the main body of the oxygen-absorbing packaging body and the oxygen-absorbing film B are heat-sealed at the sides 20 of the main body. In this situation, the opening 40 of the oxygen-absorbing packaging body 100 is heat-sealed at the upper end of the main body together with a laminated portion of either one of the two multilayer films A and the double-folded oxygen-absorbing film B to fix the oxygen-absorbing film B to the main body. Thus, the two multilayer films A are not heat-sealed except in the sides 20 and bottom 30 as illustrated in Figure 2 (b), and an article to be stored can fill the inside from the opening 40 as illustrated in Figure 2 (c). Here, the oxygen-absorbing film B includes the oxygen-absorbing multilayer body according to an embodiment of the present invention, or may be the oxygen-absorbing multilayer body itself.

### [Method for storing an article]

The method for storing an article according to an embodiment of the present invention includes a step of storing an article to be stored by using the above-described oxygen-absorbing multilayer body or the above-described oxygen-absorbing packet. Inclusion of the step provides an ability to absorb oxygen in a given atmosphere and enables prevention of at least an odor due to aldehyde compounds.

### Examples

Hereinafter, the present invention will be more specifically described with reference to Examples and Comparative Example. The present invention is never limited to Examples below.

### [Materials for iron particles]

Primary materials for iron particles used in Examples and Comparative Example below are as follows.

### [Iron particle]

### [Iron]

Iron (in powder)

### [Particular element]

Aluminum (in powder)

### [Preparation of iron particle]

An Al (aluminum) powder and an Fe (iron) powder were mixed together at a mass ratio of 1:1, and melted in nitrogen to afford an Al-Fe alloy. The Al-Fe alloy obtained was ground by using a jaw crusher, a roll crusher, and a ball mill, and the ground product was classified by using a mesh with a mesh size of 200-mesh (0.075 mm) to afford an Al-Fe alloy having a size of 200-mesh or less. In 30% by mass sodium hydroxide aqueous solution at 50°C, 150 g of the Al-Fe alloy powder obtained was stirred to mix for 1 hour, and the mixed solution was then left to stand, and the supernatant was removed. The residual precipitate was washed with distilled water until the pH reached 10 or lower to afford a porous iron powder. The porous iron powder was obtained through reaction in aqueous solution to prevent the porous iron powder from contacting with oxygen.

The porous iron powder obtained was vacuum-dried at 200 Pa or lower and 80°C until the moisture content reached 1% by mass or lower to afford a dried product of the porous iron powder (hereinafter, the dried product of the porous iron powder is represented as "iron particle 1"). The bulk density of the iron particle 1 obtained was 1.3 g/cm³ (measured in accordance with JIS Z2504).

### [Average particle diameter]

The particle diameter of the iron particle obtained was measured by using a particle size/shape distribution analyzer ("PITA-2" produced by SEISHIN ENTERPRISE Co., Ltd.). The measurement results are shown in Table 1.

### [BET specific surface area]

The BET specific surface area of the iron particle obtained was measured by using an automated specific surface area analyzer (trade name "GEMINI VII2390" produced by Shimadzu Corporation). The measurement results are shown in Table 1.

### [Materials for oxygen absorber compositions]

Primary materials for oxygen absorber compositions used in Examples and Comparative Example below are as follows.

### [Oxygen absorber composition]

### [Hydrocarbon resin]

Linear low-density polyethylene (obtained from UBE-MARUZEN POLYETHYLENE, MFR: 4.0 g/10 min (measured in accordance with JIS K7210), hereinafter, abbreviated as "resin 1")

### [Iron particle]

Iron particle 1

### [Aldehyde absorber]

"Dushlite" (produced by Sinanen Zeomic Co., Ltd.)

### [Preparation of oxygen absorber composition]

Materials in a composition as shown in Table 1 below were melt-kneaded with a twin-screw extruder to afford an oxygen absorber composition in the form of pellets. Specifically, the materials were placed into the twin-screw extruder through two feeders of a main feeder and a side feeder each purged with nitrogen gas. The resin 1 was placed from the main feeder, and the iron particle 1 was added into the melted resin 1 from the side feeder. In Table 1 below, the unit of each numerical value is % by mass, and the total is 100.0% by mass.

**[Table 1]**

| | | Reference Example 1 | Comparative Example 1 | Example 1 | Example 2 | Example 3 | Example 4 |
|---|---|---|---|---|---|---|---|
| Hydrocarbon resin | Type | resin 1 | resin 1 | resin 1 | resin 1 | resin 1 | resin 1 |
| | Content | 100 | 72.4 | 72.4 | 72.2 | 65.3 | 56.1 |
| Iron particle | Type | - | iron particle 1 | iron particle 1 | iron particle 1 | iron particle 1 | iron particle 1 |
| | Average particle diameter [µm] | - | 20 | 20 | 20 | 20 | 20 |
| | BET specific surface area [m²/g] | - | 98 | 98 | 98 | 98 | 98 |
| | Content | - | 27.6 | 25.7 | 23.8 | 25.2 | 20.4 |
| Aldehyde absorber | Type | - | - | KS730 | KS730 | KS730 | KS730 |
| | Content | - | - | 1.9 | 4.0 | 9.5 | 23.5 |
| Amount of oxygen absorbed | mL/container | 0 | 82 | 84 | 83 | 81 | 76 |
| Acetaldehyde concentration | ppm | 0 | 20 | 0 | 0 | 0 | 0 |
| Odor intensity | | 1.0 | 3.7 | 3.3 | 2.7 | 1.7 | 1.7 |

### [Formation of oxygen-absorbing multilayer body and oxygen-absorbing packet]

An oxygen-absorbing multilayer body and an oxygen-absorbing packet were obtained as follows: by using an oxygen absorber composition in the form of pellets obtained in the above for an oxygen-absorbing layer (layer a), high-density polyethylene ("UBE polyethylene B300H" produced by UBE-MARUZEN POLYETHYLENE, MFR: 1.0 g/10 min (measured in accordance with JIS K7210)) for a thermoplastic resin layer (layer b), ethylene-vinyl alcohol copolymer resin (trade name "Soarnol DC3203RB" produced by The Nippon Synthetic Chemical Industry Co., Ltd.) as a resin for a gas barrier layer (layer c), and carboxylic acid-modified polyolefin resin (trade name "ZELAS MC721AP" produced by Mitsubishi Chemical Corporation) as a resin for an adhesive resin layer (d), oxygen-absorbing packets each consisting of an oxygen-absorbing multilayer body with a capacity of 100 mL were prepared with a direct blow molding machine for four-type/six-layer configuration. The dimensions were height: 83.5 mm, outer diameter of bottom of container: 48 mm, and inner diameter of opening: 25.2 mm. The surface area of the innermost layer was 0.013 m². The production temperature in the molding was 200°C. The layer configuration of each oxygen-absorbing packet was thermoplastic resin layer (layer b)/adhesive resin layer (layer d)/barrier layer (layer b)/adhesive resin layer (layer d)/oxygen-absorbing layer (layer a)/thermoplastic resin layer (layer b) in the order from the outer side to inner side, and the thicknesses of the layers were 600 µm/100 µm/100 µm/100 µm/100 µm/200 µm/100 µm in the order from the outer side to inner side.

### [Amount of oxygen absorbed]

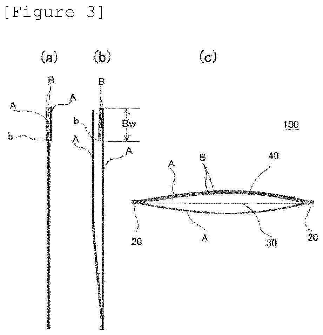

The amount of oxygen absorbed (mL/container) was determined for the oxygen-absorbing packets obtained by using a test apparatus illustrated in Figure 3. Figure 3 is a schematic illustration of a test apparatus for measurement of aldehyde concentration or the like for the oxygen-absorbing packet according to an embodiment of the present invention. Specifically, measurement was performed as follows: each oxygen-absorbing packet was put in a gas barrier bag (Al foil-laminated plastic bag), and the gas barrier bag was adjusted to be filled with 500 mL of air (oxygen concentration: 20.9 volume%), and hermetically sealed after completion of filling, and stored in an environment at 40°C and 40%RH for 10 days.

The amount of oxygen in the gas barrier bag after stored was measured by using a gas chromatograph. From the measurement results, the reduction in oxygen in the gas barrier bag was determined as the amount of oxygen absorbed per oxygen-absorbing hollow container (mL/container). The results are shown in Table 1.

### [Acetaldehyde concentration]

The amount of acetaldehyde in the gas barrier bag after stored as described above was measured by using a gas chromatograph, and determined as acetaldehyde concentration by mass (ppm). The results are shown in Table 1.

### [Odor intensity]

The odor intensity in the gas barrier bag after stored as described above was evaluated on the basis of criteria below. The results are shown in Table 1. The odor intensity was rated with a score ranging from the following 1 to 5 at an interval of 0.1.
1: an odor barely perceivable
2: a weak odor allowing recognition of the origin of the odor
3: an odor easily perceivable
4: a strong odor
5: an extremely strong odor

The present application is based on a Japanese patent application (Japanese Patent Application No. 2016-67851) filed with the Japan Patent Office on March 30, 2016, the contents of which are incorporated herein by reference.

### Reference Signs List

- 50: oxygen-absorbing hollow container
- 51: oxygen-absorbing layer (layer a)
- 52: thermoplastic resin layer (layer b)
- 53: gas barrier layer (layer c)
- 54: adhesion layer (layer d)
- 20: side of oxygen-absorbing packaging body
- 30: bottom of oxygen-absorbing packaging body
- 40: opening of oxygen-absorbing packaging body
- 100: oxygen-absorbing packaging body
- A: multilayer film
- B: oxygen-absorbing film
- Bw: width
- b: mountain fold of oxygen-absorbing film

## Claims

1. An oxygen absorber composition comprising:
a hydrocarbon resin;
an iron particle having an average particle diameter of 1.0 µm or more and 200 µm or less and having a BET specific surface area of 10 m²/g or more; and
an aldehyde absorber capable of absorbing at least aldehyde compound.

2. The oxygen absorber composition according to claim 1, wherein the aldehyde absorber comprises a basic compound.

3. The oxygen absorber composition according to claim 1 or 2, wherein the aldehyde absorber comprises magnesium oxide or calcium oxide.

4. The oxygen absorber composition according to any one of claims 1 to 3, wherein the aldehyde absorber comprises at least one derivative selected from the group consisting of a hydrazine derivative, a urea derivative, and a guanidine derivative.

5. The oxygen absorber composition according to claim 4, wherein the hydrazine derivative is at least one selected from the group consisting of an aminoguanidine derivative and a hydrazine salt.

6. The oxygen absorber composition according to claim 4 or 5, wherein the aldehyde absorber comprises a carrier that supports the derivative.

7. The oxygen absorber composition according to any one of claims 1 to 6, wherein the hydrocarbon resin is at least one resin selected from the group consisting of polyolefin resin, polyester resin, polyamide resin, polyvinyl alcohol resin, ethylene-vinyl alcohol copolymer resin, and chlorine-containing resin.

8. The oxygen absorber composition according to any one of claims 1 to 7, wherein the iron particle is a porous-shaped iron particle.

9. The oxygen absorber composition according to any one of claims 1 to 8, wherein
the iron particle is obtained through treatment of an alloy containing the iron and a particular element with an alkali aqueous solution to remove at least a part of the particular element through dissolution out, and
the particular element is at least one element selected from the group consisting of aluminum, zinc, tin, lead, magnesium, and silicon.

10. An oxygen-absorbing multilayer body comprising a plurality of layers, wherein
the oxygen absorber composition according to any one of claims 1 to 9 is used for at least one layer of the plurality of layers.

11. An oxygen-absorbing packet comprising a packet, wherein the packet comprises the oxygen-absorbing multilayer body according to claim 10 at least as a part of the packet.

12. A method for storing an article, the method comprising a step of storing an article to be stored by using the oxygen-absorbing multilayer body according to claim 10 or the oxygen-absorbing packet according to claim 11.
